# DEMANDE DE BREVET EUROPEEN

(11) **EP 3 913 643 A1**
(43) Date de publication de la demande: **24.11.2021**
(21) Numéro de dépôt: 21305654.2
(22) Date de dépôt: 19.05.2021
(51) Int. Cl.: H01B 7/28, H01B 3/44

(54) **CÂBLE PRÉSENTANT UNE RÉSISTANCE À LA CORROSION AMÉLIORÉE**

(30) Priorité: 20.05.2020 FR 2005377
(71) Demandeur: Nexans, 92400 Courbevoie (FR)
(72) Inventeur: SALAME, Basil, 69003 LYON (FR); CHARMETANT, Adrien, 69003 LYON (FR); HAEHNER, Thomas, 92160 ANTONY (FR)
(74) Mandataire: Ipsilon

(57) **Abrégé**

La présente invention concerne un câble électrique comprenant au moins un élément électriquement conducteur allongé contenant une pluralité de brins électriquement conducteurs et au moins une couche polymère fluorée entourant ledit élément électriquement conducteur allongé, ledit câble comprenant en outre une couche métallique comprenant du nickel interposée entre l'élément électriquement conducteur allongé et la couche polymère fluorée, et un procédé de fabrication dudit câble.

## Description

La présente invention concerne un câble électrique comprenant au moins un élément électriquement conducteur allongé contenant une pluralité de brins électriquement conducteurs et au moins une couche polymère fluorée entourant ledit élément électriquement conducteur allongé, ledit câble comprenant en outre une couche métallique comprenant du nickel interposée entre l'élément électriquement conducteur allongé et la couche polymère fluorée, et un procédé de fabrication dudit câble.

L'invention s'applique typiquement mais non exclusivement aux câbles électriques destinés au transport d'énergie, notamment aux câbles d'énergie à basse tension (par exemple inférieure à 6 KV) ou des câbles de transmission de données très basse tension (par exemple inférieure à 50 V en courant alternatif ou à 120 V en courant continu), à moyenne tension (notamment de 6 à 45-60 kV) ou à haute tension (notamment supérieure à 60 kV, et pouvant aller jusqu'à 400 kV), qu'ils soient en courant continu ou alternatif, dans les domaines du transport d'électricité aérien, sous-marin, terrestre, ou encore de l'aéronautique. L'invention s'applique en particulier aux câbles électriques utilisés dans le domaine de l'aéronautique, par exemple à bord des avions.

Ce type de câble électrique doit satisfaire de nombreux critères nécessaires à son utilisation dans l'aéronautique, notamment lorsqu'il est soumis à des tensions élevées, de l'ordre de 230 V, et pour les câbles situés dans les zones non pressurisées.

Ce voltage relativement élevé, combiné aux contraintes liées à l'aéronautique, telles que l'humidité, la température élevée et la basse pression, peuvent générer de la corrosion sur les équipements électroniques, tels que les câbles électriques.

D'autres critères peuvent également être pris en compte comme le poids et le diamètre dudit câble qui ne doivent pas être excessifs, et la marquabilité dudit câble afin de permettre, quand cela est nécessaire, son identification.

Dans le domaine de l'aéronautique, il est connu d'utiliser un câble comprenant une pluralité de brins métalliques électriquement conducteurs et au moins une couche polymère fluorée entourant la pluralité de brins électriquement conducteurs. Or, les polymères généralement utilisés dans la couche polymère fluorée tel que le polytétrafluoroéthylène (PTFE), et notamment les produits issus de leur décomposition dans le temps, sont très corrosifs pour les brins métalliques électriquement conducteurs, notamment de par leur teneur en fluor et également les températures élevées requises pour leur fabrication. Il est donc connu de revêtir chacun des brins d'une couche métallique d'argent.

En particulier, la demande de brevet américaine US 3 397 046 décrit un câble comprenant un élément électriquement conducteur, une couche d'argent entourant ledit élément électriquement conducteur, une couche d'un polyorganosiloxane réticulé dérivé d'un fluide silicone monométhyl entourant ladite couche d'argent, et une couche polymère fluorée entourant ladite couche d'un polyorganosiloxane réticulé. Cependant, la résistance à la corrosion d'un tel câble n'est pas optimisée. En particulier, une telle résistance à la corrosion est conditionnée par la fabrication d'une couche d'argent homogène et sans défaut, sur chacun des brins électriquement conducteurs, et un environnement qui n'est pas trop humide (humidité inférieure à 50%). D'autre part, le câble de US 3 397 046 requiert l'utilisation d'une couche polymère additionnelle, ce qui n'est pas sans conséquence sur le poids total du câble obtenu. Enfin, l'utilisation de l'argent en tant que métal augmente le coût de production du câble.

Le but de la présente invention est par conséquent de pallier les inconvénients des techniques de l'art antérieur et en particulier de fournir un câble électrique présentant une résistance à la corrosion améliorée, tout en garantissant un coût de production réduit et un poids le plus faible possible, notamment lorsque le câble est destiné au domaine de l'aéronautique et subit lors d'un vol, de hautes températures (aux alentours de 150°C) et de basses pressions (environ 150 mbar).

Le but est atteint par l'invention qui va être décrite ci-après.

L'invention a pour premier objet un câble électrique comprenant au moins un élément électriquement conducteur allongé contenant une pluralité de brins électriquement conducteurs, et au moins une couche polymère fluorée entourant ledit élément électriquement conducteur allongé, caractérisé en ce que ledit câble comprend en outre une couche métallique comprenant du nickel interposée entre l'élément électriquement conducteur allongé et la couche polymère fluorée, ladite couche métallique comprenant du nickel entourant la pluralité de brins électriquement conducteurs.

Ainsi, grâce à cette couche métallique comprenant du nickel, en particulier entourant la pluralité de brins électriquement conducteurs, on obtient un câble présentant une résistance à la corrosion améliorée, tout en garantissant un coût de production réduit et un poids le plus faible possible.

### L'élément électriquement conducteur

L'élément électriquement conducteur allongé comprend une pluralité de brins électriquement conducteurs. L'électriquement électriquement conducteur allongé représente une âme conductrice multibrin.

Selon une forme de réalisation de l'invention, l'élément électriquement conducteur allongé comprend un brin électriquement conducteur central, au moins une première couche de brins électriquement conducteurs entourant ledit brin électriquement conducteur central, et de préférence au moins une deuxième couche de brins électriquement conducteurs entourant ladite première couche de brins électriquement conducteurs. Le brin électriquement conducteur central est ainsi positionné au centre de l'élément électriquement conducteur allongé.

L'élément électriquement conducteur allongé comprend de préférence au moins deux couches de brins électriquement conducteurs.

L'élément électriquement conducteur allongé peut comprendre en outre une ou plusieurs couches supplémentaires de brins électriquement conducteurs. Ainsi, les brins électriquement conducteurs sont répartis dans les première et deuxième couches, et dans la ou les couches supplémentaires de brins électriquement conducteurs.

L'élément électriquement conducteur allongé peut être positionné au centre du câble (i.e. position centrale). L'élément électriquement conducteur allongé est par conséquent un élément électriquement conducteur allongé central.

Un brin électriquement conducteur a de préférence un diamètre allant de 0,5 mm à 5 mm environ, et de préférence encore allant de 1 mm à 3 mm environ.

Les brins électriquement conducteurs ont chacun un diamètre (respectivement une section) qui satisfait à la Norme EN2083.

Un brin électriquement conducteur peut avoir une section allant de 0,25 mm² à 110 mm², et de préférence allant de 9 mm² à 100 mm² environ.

Les brins électriquement conducteurs sont de préférence de section circulaire ou sensiblement circulaire (e.g. ovale).

L'élément électriquement conducteur allongé comprend de préférence des brins électriquement conducteurs non isolés.

Dans l'invention, l'expression « brins non isolés » ou « brins nus » signifie que chacun desdits brins est exempt d'une couche électriquement isolante, en particulier chacun desdits brins est exempt d'une couche électriquement isolante entourant ledit brin, notamment d'une couche électriquement isolante à base de polymère(s) et/ou de céramique(s).

Avantageusement, tous les brins électriquement conducteurs de l'élément électriquement conducteur allongé sont des brins non isolés.

Un brin électriquement conducteur de l'élément électriquement conducteur allongé a de préférence au moins une surface de contact physique direct avec un autre brin de de l'élément électriquement conducteur allongé qui lui est adjacent.

Chacun des brins électriquement conducteurs formant l'élément électriquement conducteur allongé du câble de l'invention peut comprendre un ou plusieurs fils électriquement conducteurs, et de préférence plusieurs fils électriquement conducteurs. On parle alors de brin électriquement conducteur multifilaire. Cela permet ainsi d'assouplir l'élément électriquement conducteur multibrin.

Chacun des fils électriquement conducteurs d'un brin a de préférence un diamètre allant de 0,1 mm à 0,5 mm environ, et de préférence encore allant de 0,2 mm à 0,45 mm environ.

Le fil électriquement conducteur peut avoir une section allant de 0,007 mm² à 10 mm², et de préférence allant de 0,03 mm² à 5 mm² environ.

L'élément électriquement conducteur allongé comprend de préférence des brins électriquement conducteurs câblés ou torsadés. Cela permet d'obtenir un assemblage concentrique pour conserver cylindricité et souplesse.

Avantageusement, tous les brins électriquement conducteurs de l'élément électriquement conducteur allongé sont assemblés par des opérations de câblage, notamment pour former un toron ou un tordon. On parle alors de brins câblés ou torsadés.

La formation d'un toron est bien connue selon l'anglicisme « stranded wires », et la formation d'un tordon est bien connue selon l'anglicisme « bunched wires ». Le tordonnage permet de torsader ensemble des brins ou fils individuels dans la même direction, lesdits brins ou fils individuels n'ayant pas une organisation spécifique ou un arrangement géométrique particulier les uns par rapport aux autres. Les brins ou fils subissent donc un processus de torsion, lesdits brins étant initialement arrangés en faisceaux. Dans ce mode de réalisation, les propriétés mécaniques sont optimisées, notamment en termes de flexibilité.

L'élément électriquement conducteur allongé a préférentiellement la forme d'un tordon. Cela permet d'optimiser la flexibilité du câble. Dans ce mode de réalisation, les brins électriquement conducteurs forment ensemble un tordon.

Les brins électriquement conducteurs (respectivement les fils électriquement conducteurs constituant un brin) sont de préférence compressés.

L'élément électriquement conducteur allongé (respectivement les brins électriquement conducteurs) ont de préférence une conductivité électrique d'au moins 50% IACS, et de façon particulièrement préférée allant de 60 à 105% IACS environ.

Dans l'invention, la conductivité électrique d'un matériau, exprimée en % IACS (IACS correspondant à l'anglicisme « *International Annealed Copper Standard* »), est déterminée par rapport à la conductivité électrique à 20°C du cuivre pur recuit qui est de 5,8001x10⁷ S/m. La conductivité électrique (S/m) caractérise l'aptitude d'un matériau à laisser les électrons qu'il contient se déplacer librement sous l'effet d'un champ électrique et donc permettre le passage d'un courant électrique. La conductivité électrique en %IACS est une conductivité déterminée en courant continu.

Les brins électriquement conducteurs sont de préférence en cuivre.

L'élément électriquement conducteur allongé (respectivement les brins électriquement conducteurs) est (respectivement sont) de préférence non composite(s) ou non organique(s).

Dans l'invention, l'expression « non organique » relative au brin ou à l'élément signifie que le brin ou l'élément ne comprend pas de polymère organique ou de carbone ; ou que le brin ou l'élément est exempt de polymère organique ou de carbone.

Dans l'invention, l'expression « non composite » relative au brin ou à l'élément signifie que le brin ou l'élément ne comprend pas de polymère organique et de carbone ; ou que le brin ou l'élément est exempt de polymère organique et de carbone. En d'autres termes, un brin ou élément non composite est différent d'un brin ou élément carboné dans lequel le carbone est mélangé avec (ou imprégné par) au moins un polymère organique.

En effet, les brins composites ou organiques tels que décrits dans l'art antérieur sont des brins non conducteurs ou des brins présentant une conductivité électrique insuffisante. Par ailleurs, l'imprégnation de brins carbonés dans une matrice polymère organique augmente la rigidité desdits brins carbonés, ce qui limite la flexibilité du câble obtenu.

Selon une forme de réalisation préférée, les brins conducteurs ne sont pas entourés d'un matériau de remplissage pour combler les trous entre les brins. Par conséquent, l'élément électriquement conducteur allongé comprend des insterstices libres entre les brins conducteurs. Les avantages d'une telle forme de réalisation de l'invention sont un poids plus léger et une meilleure flexibilité du câble.

### La couche polymère fluorée

La couche polymère fluorée peut comprendre au moins un polymère fluoré.

Dans la présente invention, on entend par « polymère » tout type de polymère, tel que par exemple les homopolymères ou les copolymères (e.g. copolymère séquencé, copolymère statistique, terpolymère, ...etc).

De préférence, le polymère fluoré est choisi parmi tous les polymères comprenant du tétrafluoroéthylène en tant que monomère, le polytétrafluoroéthylène (PTFE), le poly(tétrafluoroéthylène-co-hexafluoropropylène) (FEP), le copolymère perfluoro(alkyvinyléther)/tétrafluoroéthylène (PFA), le poly(éthylène-co-tétrafluoroéthylène) (ETFE), et un de leurs mélanges.

La couche polymère fluorée a de préférence une épaisseur allant de 0,1 à 4 mm environ, et de façon particulièrement préférée allant de 0,5 à 4 mm environ.

De préférence, la couche polymère fluorée comporte, en poids par rapport au poids de ladite couche, au moins 50% de polymère(s) fluoré(s), de préférence au moins 70 % de polymère(s) fluoré(s), et de manière encore plus préférée au moins 80% de polymère(s) fluoré(s), et de manière encore plus préférée 90% de polymère(s) fluoré(s).

Avantageusement, le polymère fluoré est le PFA. En effet, ce polymère présente de bonnes propriétés de rigidité diélectrique et il a une température de fusion appropriée pour faciliter sa mise en œuvre par extrusion.

Selon l'invention, la couche polymère fluorée peut être rubanée et/ou extrudée.

Lorsqu'elle est rubanée, la couche polymère fluorée peut correspondre à l'enroulement d'un ou de plusieurs rubans de polymère(s) fluoré(s).

Préférentiellement, la couche polymère fluorée comporte un ou plusieurs rubans de polymère(s) fluoré(s), et une couche extrudée de polymère(s) fluoré(s) recouvrant le ou les rubans de polymère(s) fluoré(s).

La couche polymère fluorée peut être une couche partiellement ou totalement frittée, de préférence totalement frittée. Cela permet ainsi de lui conférer des de bonnes propriétés mécaniques.

De préférence, la couche polymère fluorée est une couche électriquement isolante. On entend par « couche électriquement isolante » une couche ayant généralement une conductivité électrique d'au plus 1.10⁻⁸ S/m (siemens par mètre), de préférence d'au plus 1.10⁻⁹ S/m, et de façon particulièrement préférée d'au plus 1.10⁻¹⁰ S/m, mesurée à 25°C en courant continu.

### La couche métallique comprenant du nickel

La couche métallique comprenant du nickel est interposée entre la couche polymère fluorée et l'élément électriquement conducteur allongé. En d'autres termes, la couche polymère fluorée entoure la couche métallique comprenant du nickel et la couche métallique comprenant du nickel entoure l'élément électriquement conducteur allongé ou la pluralité de brins électriquement conducteurs.

Grâce à cette couche métallique de nickel interposée entre la couche polymère fluorée et l'élément électriquement conducteur allongé, le câble présente une résistance à la corrosion améliorée, tout en garantissant un poids total réduit et un coût de production réduit.

Selon une forme de réalisation préférée de l'invention, la couche métallique comprenant du nickel comprend au moins 50% en poids environ de nickel, de façon particulièrement préférée au moins 70% en poids environ de nickel, et de façon plus particulièrement préférée au moins 90% en poids environ de nickel, par rapport au poids total de la couche métallique comprenant du nickel.

La couche métallique comprenant du nickel peut comprendre au plus 100% en poids environ de nickel, et de façon particulièrement préférée au plus 95% en poids environ de nickel, par rapport au poids total de la couche métallique comprenant du nickel.

Selon une forme de réalisation particulièrement préférée de l'invention, la couche de nickel comprend uniquement du nickel.

La couche métallique comprenant du nickel a de préférence une épaisseur allant de 10 µm à 2 mm environ, de façon particulièrement préférée allant de 30 µm à 1,8 mm environ, de façon plus particulièrement préférée allant de 50 µm à 1,5 mm environ, et de façon plus particulièrement préférée allant de 0,1 mm à 1,0 mm environ. Cela permet ainsi de garantir un bon compromis entre une bonne résistance à la corrosion et un poids total et un coût de production réduits. En effet, lorsque l'épaisseur de cette couche métallique est inférieure à 10 µm, l'élément électriquement conducteur allongé n'est pas suffisamment protégé contre la corrosion et lorsque l'épaisseur de cette couche métallique est supérieure à 2 mm, le coût de revient devient trop important sans pour autant que les propriétés mécaniques ne soient améliorées.

Par ailleurs, il a été mis en évidence de manière surprenante que l'utilisation d'une couche métallique comprenant du nickel entourant une pluralité de brins électriquement conducteurs permet de diminuer l'effet de peau, par rapport à un câble qui présenterait sur chacun des brins électriquement conducteurs une couche métallique comprenant du nickel. En particulier, le nickel présente une perméabilité magnétique élevée, induisant un effet de peau non négligeable dans l'élément électriquement conducteur lorsqu'il est utilisé comme revêtement de chacun des brins électriquement conducteurs. Dans le câble de l'invention, la couche métallique de nickel entourant la pluralité de brins électriquement conducteurs diminue l'effet de peau, permettant ainsi le fonctionnement du câble électrique de l'invention à des fréquences élevées (e.g. 1200Hz).

Cela permet également d'éviter l'application longue et complexe du nickel sur chacun des brins électriquement conducteurs et de diminuer le coût de revient du câble et/ou le poids du câble tout en garantissant une résistance à la corrosion.

La couche métallique comprenant du nickel est de préférence une couche solide ou compacte. En d'autres termes, elle ne comprend pas d'interstices et/ou elle n'est formée que d'un seul élément. La couche métallique comprenant du nickel est par conséquent de préférence différente d'une tresse ou d'un guipage métallique.

Selon une forme de réalisation préférée de l'invention, la couche métallique comprenant du nickel est directement en contact physique avec l'élément électriquement conducteur allongé. En d'autres termes, cela signifie qu'aucune couche additionnelle, de quelque nature que ce soit, ne peut venir s'intercaler entre l'élément électriquement conducteur allongé et ladite couche métallique comprenant du nickel. En particulier, le câble ne comprend pas de couche(s) intermédiaire(s), notamment de couche(s) métallique(s) ou de couche(s) polymère(s), positionnée(s) entre ledit élément électriquement conducteur allongé et la couche métallique comprenant du nickel. L'élément électriquement conducteur allongé présente alors une surface externe en contact physique direct avec la couche métallique comprenant du nickel.

Dans ce mode de réalisation, seule une partie des brins électriquement conducteurs de la couche la plus externe de l'élément électriquement conducteur allongé sont de préférence en contact physique direct avec la couche métallique comprenant du nickel.

Grâce à cette couche métallique comprenant du nickel, l'oxydation de l'élément électriquement conducteur allongé de l'invention, en particulier liée à la présence de produits issus de la décomposition du matériau polymère de la couche polymère fluorée, est évitée aussi bien à température ambiante (i.e. 20°C), qu'à des températures élevées allant de 100°C à 200°C. Par ailleurs, l'élément électriquement conducteur allongé de l'invention conserve de bonnes propriétés électriques, notamment en termes de conductivité électrique, de résistivité et de résistance linéique, de bonnes propriétés mécaniques, notamment en termes de tenue au pliage (bonne adhérence du revêtement sur l'élément électriquement conducteur allongé, pas de décollement après pliage) et de tenue à l'allongement (pas d'apparition de fissures en surface après tréfilage).

Avantageusement, la couche métallique comprenant du nickel peut être obtenue par dépôt chimique de nickel, par dépôt électrolytique de nickel, ou par application d'un ruban comprenant du nickel.

Le dépôt chimique de nickel, également dénommé « nickelage chimique » peut être effectué par des techniques bien connues de l'homme du métier après les traitements préalables éventuels de la surface métallique de l'élément électriquement conducteur allongé de l'invention de façon à éliminer les résidus de graisses et d'huiles (usinage, manipulation), les oxydes (corrosion, calamines de traitement thermique) et à activer la surface.

De préférence, le dépôt chimique de la couche métallique comprenant du nickel est réalisé par réduction autocatalytique d'un sel de nickel en milieu aqueux alcalin (i.e. pH > 7), et de préférence à un pH allant de 9,5 à 11,5 environ ou en milieu aqueux acide (i.e. pH < 7), et de préférence à un pH allant de 1 à 4 environ.

L'élément électriquement conducteur allongé est ainsi par exemple immergée dans un bain de nickelage aqueux comprenant un sel de nickel pouvant par exemple être choisi parmi le chlorure de nickel, le sulfate de nickel, le sulfamate de nickel, ou l'hypophosphite de nickel, et au moins un agent alcalin en une quantité suffisante pour amener le pH du bain à la valeur désirée. Le dépôt de nickel est alors obtenu par réduction autocatalytique des ions nickel en solution au contact de la surface métallique de l'élément électriquement conducteur allongé. Lorsque l'agent alcalin est choisi parmi les composés contenant du phosphore tels que par exemple l'hypophosphite de sodium, le nickel et le phosphore sont alors co-déposés sur ladite âme, c'est-à-dire que le nickel et le phosphore sont alliés lors de leur dépôt sur ledit élément électriquement conducteur allongé. Dans ce cas, le milieu renferme le sel de nickel et l'hypophosphite de sodium en des quantités correspondant au pourcentage massique de phosphore que l'on souhaite obtenir dans l'alliage de nickel.

La concentration en sel de nickel dans le bain de nickelage varie généralement de 1 à 10 g/L, et de préférence de 4,9 à 6 g/L pour un bain de nickelage alcalin et de 60 à 120 g/L, et de préférence de 80 à 100 g/L pour un bain de nickelage acide.

Le dépôt électrolytique de nickel peut également être effectué par des techniques bien connues de l'homme du métier, après immersion de l'élément électriquement conducteur allongé dans un bain d'électrolyse comprenant au moins un sel de nickel en solution.

La concentration en sel de nickel (e.g. sulfate de nickel ou chlorure de nickel) dans le bain d'électrolyse varie généralement de 10 à 450 g/L, et de préférence de 20 à 300 g/L.

Dans un mode de réalisation préférée, les paramètres électrolytiques utilisés lors de l'électrodéposition sont imposés par une densité de courant et une conductivité du bain d'électrolyse. La densité de courant est préférentiellement fixée de 0,5 à 80 A/dm² environ, et encore plus préférentiellement de 0,5 à 20 A/dm² environ. La température du bain d'électrolyse peut aller de 30°C à 70°C.

De préférence, l'électrodéposition est réalisée en milieu acide avec une densité de courant de 0,5 à 80 A/dm² environ, et encore plus préférentiellement de 0,5 à 20 A/dm² environ.

L'application du ruban comprenant du nickel peut se faire par enroulement du ruban autour de l'élément électriquement conducteur allongé ou par rubanage.

L'enroulement peut être longitudinal (i.e. selon l'axe longitudinal du câble ou en d'autres termes dans le sens de la longueur du câble) ou hélicoïdal, et de préférence hélicoïdal.

L'enroulement peut en outre être effectué avec des zones de recouvrement, la ou les zones de recouvrement représentant de 5 à 40% environ, et de préférence de 10 à 20% environ.

Selon une forme de réalisation de l'invention, le ruban comprenant du nickel a une épaisseur allant de 50 µm à 2 mm environ, et de façon plus particulièrement préférée allant de 0,1 mm à 1,5 mm environ.

Selon une forme de réalisation de l'invention, la couche métallique comprenant du nickel obtenue par dépôt chimique de nickel ou par dépôt électrolytique de nickel a une épaisseur allant de 10 µm à 1,5 mm environ, et de façon plus particulièrement préférée allant de 50 mm à 1,0 mm environ.

### Le câble

Le câble peut comprendre en outre une couche, notamment électriquement isolante, comprenant du polyimide (PI) interposée entre la couche métallique comprenant du nickel et la couche polymère fluorée.

Le câble peut comprendre en outre au moins une couche adhésive fluorée, pouvant comprendre au moins un polymère fluoré tel que défini dans l'invention, le polymère fluoré compris dans ladite couche adhésive fluorée étant notamment identique ou différent de celui compris dans la couche polymère fluorée de l'invention.

De manière avantageuse, au moins une couche adhésive fluorée est disposée sur au moins une des deux faces de la couche comprenant du polyimide. Une couche adhésive a pour fonction de permettre l'adhésion entre les couches qu'elle relie.

En effet, le ou les polymères fluorés de la couche adhésive subissent au préalable un traitement qui leur donne leur propriété adhérente.

Selon un mode de réalisation, la couche comprenant un polyimide et la couche polymère fluorée sont séparées par une couche adhésive fluorée.

La couche comprenant un polyimide peut être recouverte sur chacune de ses faces d'une couche adhésive fluorée, et notamment d'un revêtement de copolymère d'éthylène propylène fluoré (FEP).

Le câble peut comprendre en outre au moins une première couche semi-conductrice fluorée, pouvant comprendre au moins un polymère fluoré tel que défini dans l'invention, le polymère fluoré compris dans ladite première couche semi-conductrice étant notamment identique ou différent de celui compris dans la couche polymère fluorée de l'invention.

La première couche semi-conductrice fluorée peut par exemple être interposée entre la couche métallique comprenant du nickel et la couche polymère fluorée, et notamment être en contact physique direct avec la couche métallique comprenant du nickel.

Le câble peut comprendre en outre au moins une deuxième couche semi-conductrice fluorée, pouvant comprendre au moins un polymère fluoré tel que défini dans l'invention, le polymère fluoré compris dans ladite deuxième couche semi-conductrice étant notamment identique ou différent de celui compris dans la couche polymère fluorée de l'invention.

La deuxième couche semi-conductrice fluorée peut par exemple entourer la couche polymère fluorée, et notamment être en contact physique direct avec celle-ci.

La ou les couches semi-conductrices peuvent comprendre au moins une charge conductrice, notamment en quantité suffisante pour rendre la couche semi-conductrice.

La ou les couches semi-conductrices peuvent comprendre au moins 6% en poids environ de charge conductrice, de préférence au moins 15% en poids environ de charge conductrice, et de façon particulièrement préférée au moins 25% en poids environ de charge conductrice, par rapport au poids total de la ou des couches semi-conductrices.

La ou les couches semi-conductrices peuvent comprendre au plus 45% en poids environ de charge conductrice, et de préférence au plus 40% en poids environ de charge conductrice, par rapport au poids total de la ou des couches semi-conductrices.

La charge conductrice est de préférence une charge électriquement conductrice.

La charge conductrice peut être choisie avantageusement parmi les noirs de carbone tels que par exemple les noirs d'acétylène ou les noirs de fourneau, les graphites, et un de leurs mélanges.

Dans la présente invention, on entend par « couche semi-conductrice » une couche dont la conductivité électrique peut être strictement supérieure à 1.10⁻⁸ S/m (Siemens par mètre), de préférence d'au moins 1.10⁻³ S/m, et de préférence peut être inférieure à 1.10³ S/m, mesurée à 25°C, en courant continu.

Dans un mode de réalisation, le câble électrique comprend en outre une couche extérieure (superficielle) apte à être marquée. Cette couche extérieure peut être un ruban ou un extrudât de polymère fluoré ou un vernis fluoré, comprenant par exemple des pigments de type complexes métalliques.

Le câble comprenant les caractéristiques susmentionnées est destiné à être utilisé dans le domaine de l'aéronautique et est notamment destiné à équiper les avions.

### Procédé

L'invention a pour deuxième objet un procédé de fabrication d'un câble électrique conforme au premier objet de l'invention, caractérisé en ce qu'il comprend au moins les étapes suivantes :
i) fabriquer ledit élément électriquement conducteur allongé comprenant une pluralité de brins électriquement conducteurs,
ii) déposer la couche métallique comprenant du nickel, et
iii) appliquer la couche polymère fluorée.

### Etape i)

L'étape i) peut comprendre l'assemblage des brins électriquement conducteurs.

L'étape i) est avantageusement effectuée par toronnage ou tordonnage, et de préférence par tordonnage.

### Etape ii)

L'étape ii) peut être effectué par dépôt chimique de nickel, par dépôt électrolytique de nickel, ou par application d'un ruban comprenant du nickel, autour de l'élément électriquement conducteur allongé.

Le dépôt chimique de nickel, le dépôt électrolytique de nickel, et l'application d'un ruban comprenant du nickel sont tels que définis dans le premier objet de l'invention.

### Etape iii)

L'étape iii) peut être effectuée par extrusion et/ou rubanage.

D'autres caractéristiques et avantages de la présente invention apparaîtront à la lumière des exemples qui vont suivre en référence aux figures annotées, lesdits exemples et figures étant donnés à titre illustratif et nullement limitatif.

### Brève description des dessins

Les dessins annexés illustrent l'invention :

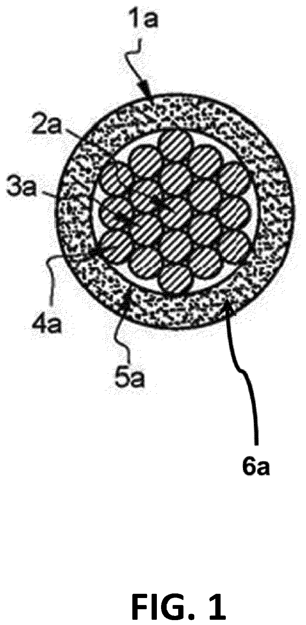

La figure 1 représente une vue en coupe transversale d'un câble selon un mode de réalisation de l'invention.

Pour des raisons de clarté, seuls les éléments essentiels pour la compréhension de l'invention ont été représentés de manière schématique, et ceci sans respect de l'échelle.

La figure 1 représente une vue en coupe transversale d'un câble 1 selon l'invention.

Sur la figure 1, le câble électrique 1a comprend un élément électriquement conducteur allongé central comprenant un brin électriquement conducteur central 2a, une première couche comprenant six brins électriquement conducteurs 3a entourant ledit brin électriquement conducteur central 2a, et une deuxième couche comprenant douze brins électriquement conducteurs 4a entourant ladite première couche. L'élément électriquement conducteur allongé central est entourée par une couche métallique comprenant du nickel 5a, et ladite couche métallique comprenant du nickel 5a est entourée par une couche polymère fluorée 6a.

## Revendications

1. Câble électrique comprenant au moins un élément électriquement conducteur allongé contenant une pluralité de brins électriquement conducteurs, et au moins une couche polymère fluorée entourant ledit élément électriquement conducteur allongé, **caractérisé en ce que** ledit câble comprend en outre une couche métallique comprenant du nickel interposée entre l'élément électriquement conducteur allongé et la couche polymère fluorée, ladite couche métallique comprenant du nickel entourant la pluralité de brins électriquement conducteurs.

2. Câble selon la revendication 1, **caractérisé en ce que** la couche métallique comprenant du nickel comprend au moins 50% en poids de nickel par rapport au poids total de la couche métallique comprenant du nickel.

3. Câble selon la revendication 1 ou 2, **caractérisé en ce que** la couche métallique comprenant du nickel a une épaisseur allant de 10 µm à 2 mm.

4. Câble selon l'une quelconque des revendications précédentes, **caractérisé en ce que** la couche métallique comprenant du nickel est directement en contact physique avec l'élément électriquement conducteur allongé.

5. Câble selon l'une quelconque des revendications précédentes, **caractérisé en ce que** la couche métallique comprenant du nickel est obtenue par dépôt chimique de nickel, par dépôt électrolytique de nickel, ou par application d'un ruban comprenant du nickel.

6. Câble selon l'une quelconque des revendications précédentes, **caractérisé en ce que** la couche polymère fluorée comprend au moins un polymère fluoré.

7. Câble selon l'une quelconque des revendications précédentes, **caractérisé en ce que** la couche polymère fluorée comprend au moins un polymère fluoré choisi parmi tous les polymères comprenant du tétrafluoroéthylène en tant que monomère, le polytétrafluoroéthylène (PTFE), le poly(tétrafluoroéthylène-co-hexafluoropropylène) (FEP), le copolymère perfluoro(alkyvinyléther)/tétrafluoroéthylène (PFA), le poly(éthylène-co-tétrafluoroéthylène) (ETFE), et un de leurs mélanges.

8. Câble selon l'une quelconque des revendications précédentes, **caractérisé en ce que** la couche polymère fluorée est une couche électriquement isolante.

9. Câble selon l'une quelconque des revendications précédentes, **caractérisé en ce que** l'élément électriquement conducteur allongé comprend un brin électriquement conducteur central, au moins une première couche de brins électriquement conducteurs entourant ledit brin électriquement conducteur central, et de préférence au moins une deuxième couche de brins électriquement conducteurs entourant ladite première couche de brins électriquement conducteur.

10. Câble selon l'une quelconque des revendications précédentes, **caractérisé en ce que** la couche métallique comprenant du nickel est une couche solide.

11. Câble selon l'une quelconque des revendications précédentes, **caractérisé en ce que** l'élément électriquement conducteur allongé est non composite ou non organique.

12. Câble selon l'une quelconque des revendications précédentes, **caractérisé en ce qu'**il comprend en outre au moins une première couche semi-conductrice fluorée, ladite première couche semi-conductrice fluorée étant interposée entre la couche métallique comprenant du nickel et la couche polymère fluorée.

13. Procédé de fabrication d'un câble électrique tel que défini à l'une quelconque des revendications précédentes, **caractérisé en ce qu'**il comprend au moins les étapes suivantes :
i) fabriquer ledit élément électriquement conducteur allongé comprenant une pluralité de brins électriquement conducteurs,
ii) déposer la couche métallique comprenant du nickel, et
iii) appliquer la couche polymère fluorée.

14. Procédé de fabrication d'un câble électrique selon la revendication 13, **caractérisé en ce que** l'étape ii) est effectuée par dépôt chimique de nickel, par dépôt électrolytique de nickel, ou par application d'un ruban comprenant du nickel, autour de l'élément électriquement conducteur allongé.
